# EUROPEAN PATENT APPLICATION

(11) **EP 3 085 530 A1**
(43) Date of publication of application: **26.10.2016**
(21) Application number: 16000923.9
(22) Date of filing: 22.04.2016
(51) Int. Cl.: B32B 17/10, C03C 27/12, G02F 1/17

(54) **LAMINATED GLASS**

(30) Priority: 24.04.2015 JP 2015089773
(71) Applicant: Asahi Glass Company, Limited, Tokyo 100-8405 (JP)
(72) Inventor: Miyasaka, Seiichi, Tokyo, 100-8405 (JP); Aoki, Tokihiko, Tokyo, 100-8405 (JP)
(74) Representative: Müller-Boré & Partner Patentanwälte PartG mbB

(57) **Abstract**

To provide laminated glass with a suspended particle device (SPD) film excellent in property of switching light transmittance for a long term by suppressing deterioration over time of the SPD film, in particular, deterioration due to intrusion of moisture at an end portion. A laminated glass includes: a pair of glass plates opposing each other, a pair of intermediate bonding layers in contact with opposing surfaces of the pair of glass plates respectively; a SPD film arranged in a predetermined region in a region corresponding to a region except at least a part of band-shaped regions of peripheral edge portions of a main surface of the glass plate, between the pair of intermediate bonding layers; and a barrier layer in a laminated structure including a low-moisture permeable layer and a bonding layer, arranged between the pair of intermediate bonding layers in a manner to correspond to the band-shaped regions.

## Description

The present invention relates to a laminated glass and, in particular, to a laminated glass with a suspended particle device film.

As window glass intended for building and vehicle, a glass (smart glass) capable of electrically switching the transmittance of light by on/off of a power supply switch is known. As a functional material used for such a smart glass, there is a suspended particle device (hereinafter sometimes referred to as "SPD") film.

The SPD film is configured such that a polymer layer containing suspended particles which can be oriented by application of voltage thereto is sandwiched between two films coated with transparent conducting films. The smart glass is fabricated by sealing the SPD film in laminated glass made by bonding glass plates with an intermediate bonding film In this event, for the purpose of protecting the end portion of the SPD film, the SPD film is cut into a size smaller than the sizes of the glass plates and the intermediate bonding film and sealed in the laminated glass such that its end portion is covered with the intermediate bonding film. Specifically, the general configuration is that an intermediate bonding film in a frame shape is arranged at a peripheral portion of the SPD film, the SPD film and the intermediate bonding film are sandwiched between two intermediate bonding films, and the two intermediate bonding films are further sandwiched between a pair of glass plates.

However, even if the SPD film is sealed in the laminated glass as in the above, the heat and moisture intruding from an end face of the laminated glass reach the end portion of the SPD film via the intermediate bonding film, or the end portion deteriorates due to influence of a plasticizer contained in the intermediate bonding film, resulting in a problem of becoming impossible to switch the light transmittance in response to on/off of the power supply switch at the end portion.

As means for preventing deterioration of the end portion of the SPD film sealed in the laminated glass, several techniques regarding the intermediate bonding film in a frame shape are suggested. For example, Patent Reference 1 discloses a technique of using an intermediate bonding film made of a material free from a plasticizer, such as an ethylene-vinyl acetate copolymer resin or the like in order to prevent intrusion of the plasticizer from the intermediate bonding film. Besides, Patent Reference 2 discloses a technique of drying a constituent material of an intermediate bonding film including an intermediate bonding film in a frame shape to reduce the moisture content before fabrication of laminated glass in order to suppress moisture intruding from the intermediate bonding film in a frame shape.

### Patent References

Patent Reference 1: JP-A 2009-534283
Patent Reference 2: JP-A 2013-505188

However, even by using these techniques, the intermediate bonding film in a frame shape, when its width is small, for example, 10 mm or less, does not have sufficient durability against the intrusion of moisture from the end face of the laminated glass, leading to deterioration. Therefore, it is hard to say that the laminated glass has sufficient durability for usage of automobile and building even if using these techniques.

Hence, as a method of preventing the intrusion of moisture from the end face of the laminated glass and eliminating the influence of the plasticizer in the intermediate bonding film, it is also conceivable to replace the intermediate bonding film in a frame shape in the above configuration with a film different in constituent material from the intermediate bonding film, for example, a film made of a transparent polyester resin such as a polyethylene terephthalate resin (PET). The plasticizer will never elute in use of the PET film The PET film also can be expected to prevent the intrusion of moisture from the end face of the laminated glass because the film is low in moisture permeability.

However, in the case of using the PET film, bubbles are likely to be generated between the end face of the PET film in a frame shape and the end face of the SPD film in contact with the PET film and may degrade the appearance. Further, the layer in a frame shape needs to have a thickness at the same level as that of the SPD film having a thickness of about 250 µm or more. For example, the PET film has a problem of reduction in transparency and increase in cost when it has such a thickness.

An object of the present invention is to provide laminated glass with an SPD film excellent in property of switching transmittance of light for a long term by suppressing deterioration over time of the SPD film, in particular, deterioration due to intrusion of moisture at an end portion.

A laminated glass of the present invention includes: a pair of glass plates opposing each other; a pair of intermediate bonding layers in contact with opposing surfaces of the pair of glass plates respectively; a suspended particle device film arranged in a predetermined region in a region corresponding to a region except at least a part of band-shaped regions of peripheral edge portions of a main surface of the glass plate, between the pair of intermediate bonding layers; and a barrier layer in a laminated structure including a low-moisture permeable layer and a bonding layer, arranged between the pair of intermediate bonding layers in a manner to correspond to the band-shaped regions.

According to the present invention, it is possible to provide a laminated glass with an SPD film excellent in property of switching transmittance of light for a long term by suppressing deterioration over time of the SPD film, in particular, deterioration due to intrusion of moisture at an end portion.
[Fig. 1] is a front view of one embodiment of a laminated glass of the present invention.
[Fig. 2] is a cross-sectional view taken along a line X-X of the laminated glass illustrated in Fig. 1.
[Fig. 3] is a front view of an evaluation sample in EXAMPLES.
[Fig. 4] is a cross-sectional view of an end portion of the evaluation sample in EXAMPLES.
[Fig. 5] is a front view of laminated glass in Example 1.
[Fig. 6] is a cross-sectional view taken along a line Y-Y of the laminated glass illustrated in Fig. 5.

Hereinafter, embodiments of the present invention will be described. It should be noted that the present invention is not limited to these embodiments, and these embodiments may be changed or modified without departing from the spirit and scope of the present invention.

The laminated glass of the present invention is laminated glass including a pair of glass plates opposing each other and a pair of intermediate bonding layers in contact with opposing surfaces of the pair of glass plates respectively, wherein an SPD film and a barrier layer in a lammated structure including a low-moisture permeable layer and a bonding layer are arranged in the following positional relationship between the pair of intermediate bonding layers.

In the laminated glass of the present invention, the SPD film is arranged between the pair of intermediate bonding layers. A region where the SPD film is arranged is a predetermined region in a region corresponding to a region except at least a part of band-shaped regions of peripheral edge portions of a main surface of the glass plate. The barrier layer is arranged between the pair of intermediate bonding layers in a manner to correspond to the band-shaped regions. In other words, using the SPD film and the barrier layer, a layer in a planar shape corresponding to the shape of the main surface of the glass plate is formed between the pair of intermediate bonding layers. The layer in a planar shape may include another layer other than the SPD film and the barrier layer as long as the SPD film and the barrier layer are arranged as described above.

In the description, the peripheral edge portion of the main surface of the glass plate means a region having a certain width from the outer periphery of the main surface toward the central portion. Besides, in the description, the outer periphery side viewed from the central portion of the main surface of the glass plate is referred to as an outside, and the central portion side viewed from the outer periphery is referred to as an inside.

The band-shaped regions where the barrier layer is arranged may be at least a part or all of the peripheral edge portions of the region corresponding to the main surface of the glass plate as needed. For example, in a usage in which there is a particular concern about intrusion of moisture from a certain direction or the like, the barrier layer in a band shape only needs to be provided only at the peripheral edge portion corresponding to the direction. In this case, the SPD film is arranged in a predetermined region in a region except the band-shaped regions where the barrier layer is arranged of the region corresponding to the main surface of the glass plate. The arrangement region of the SPD film may be the whole or a part of the region except the band-shaped regions where the barrier layer is arranged of the region corresponding to the main surface of the glass plate. When the arrangement region of the SPD film is a part of the region except the band-shaped regions where the barrier layer is arranged of the region corresponding to the main surface of the glass plate, for example, a layer made of the same material as that of a later-described intermediate bonding layer is provided in the remaining region. Note that the SPD film is preferably arranged such that the end face on the outside of the SPD film is in contact with the end face on the inside of the barrier layer.

Note that from the viewpoint of more surely protecting the SPD film, the barrier layer is preferably arranged in band shapes at all of the peripheral edge portions of the region corresponding to the main surface of the glass plate. In other words, the planar shape of the barrier layer is preferably in such a frame shape that its outer periphery is substantially coincident with the outer periphery of the main surface of the glass plate. In this case, the SPD film is preferably arranged such that its outer periphery is substantially coincident with the inner periphery of the barrier layer and the entire end face on the outside (hereinafter, referred to also as an "outer peripheral surface") of the SPD film is in contact with the entire end face on the inside (hereinafter, referred to also as an "inner peripheral surface") of the barrier layer.

In the laminated glass of the present invention, by arranging the SPD film and the barrier layer as described above and making the barrier layer into a laminated structure including the low-moisture permeable layer and the bonding layer, the barrier layer sufficiently suppresses intrusion of moisture or the like from the outside, and thereby can suppress deterioration, in particular, at the end portion of the SPD film. Further, in the laminated glass of the present invention, even in the case where end faces of the SPD film and the barrier layer are in contact with each other, bubbles hardly remain at the interface between the SPD film and the barrier layer, thereby making it possible to suppress occurrence of poor appearance due to remaining bubbles.

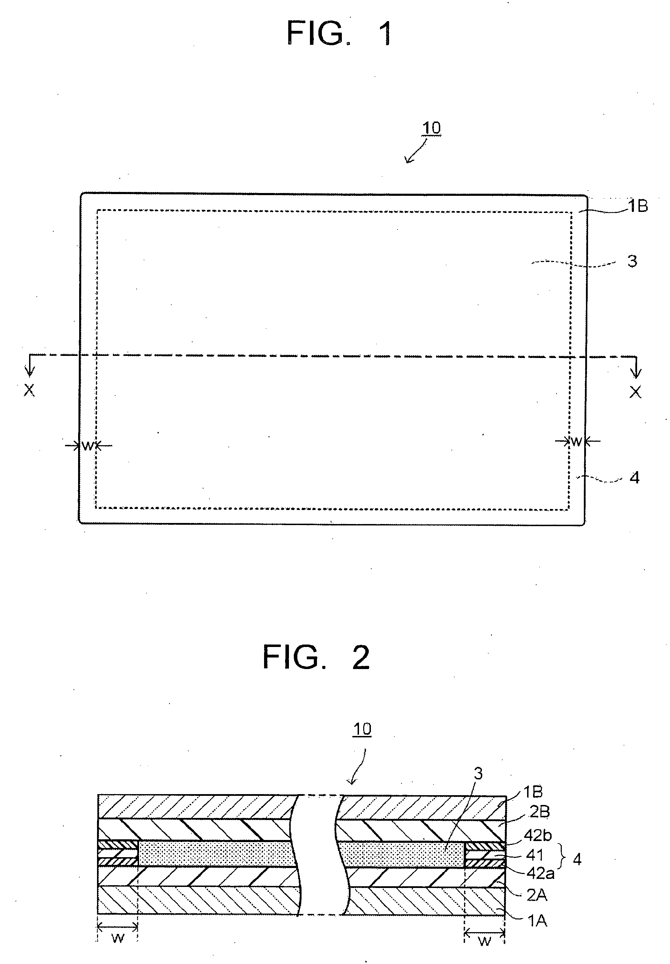

Hereinafter, embodiments of the laminated glass of the present invention will be described referring to the drawings. Fig. 1 is a front view of one embodiment of the laminated glass of the present invention, and Fig. 2 is a cross-sectional view taken along a line X-X of the laminated glass illustrated in Fig. 1.

The laminated glass 10 illustrated in Fig. 1 and Fig. 2 has a pair of glass plates 1A, 1B opposing each other, and a pair of intermediate bonding layers 2A, 2B in contact with opposing surfaces of the pair of glass plates 1A, 1B, respectively. In the laminated glass 10, the pair of glass plates 1A, 1B and the pair of intermediate bonding layers 2A, 2B have main surfaces with substantially the same shape and same dimensions.

The laminated glass 10 further has, between the pair of intermediate bonding layers 2A, 2B, an SPD film 3 having a main surface with substantially the same shape as and an area smaller than those of the main surfaces of the glass plates 1A, 1B and having an outer periphery of the main surface located on an inner side of the outer peripheries of the main surfaces of the glass plates 1A, 1B, and has a barrier layer 4 arranged such that its inner peripheral surface is in contact with an outer peripheral surface of the SPD film 3 and having a main surface shape in a frame shape having an outer periphery substantially coincident with outer peripheries of the main surfaces of the glass plates 1A, 1B. The barrier layer 4 has a laminated structure in a configuration in which a bonding layer 41 is sandwiched between two low-moisture permeable layers 42a, 42b.

Though not illustrated in Fig. 1 and Fig. 2, the laminated glass 10 has a wiring conductor for connecting a transparent electrode that the SPD film 3 has and an external power supply. When the laminated glass 10 is used incorporated in a window frame or the like, the laminated glass 10 is connected to the external power supply using the wiring conductor and thereby functions as glass (smart glass) that can electrically switch the transmittance of light by change of the SPD film 3 due to on/off of a power supply switch.

Here, in the description, "substantially the same shape, same dimensions" means having the same shape and same dimensions visually. Also in other cases, "substantially" means the same meaning as the above.

Hereinafter, components constituting the laminated glass 10 will be described.

### [Glass plate]

Examples of the material of the glass plates 1A, 1B used for the laminated glass 10 in the embodiments of the present invention include transparent inorganic glass and organic glass (resin). As the inorganic glass, ordinary soda lime glass (referred to also as soda lime silicate glass), borosilicate glass, non-alkali glass, quartz glass and the like are used without any particular limitation. Among them, soda lime glass is particularly preferable. Its forming method is also not particularly limited and, for example, float plate glass formed by a float process or the like is preferable.

Examples of the organic glass (resin) include a polycarbonate resin, a polystyrene resin, an aromatic polyester resin, an acrylic resin, a polyester resin, a polyarylate resin, a polycondensate of halogenated bisphenol A and ethylene glycol, an acrylic urethane resin, a halogenated aryl group-containing acrylic resin and the like. Among them, the polycarbonate resin such as an aromatic polycarbonate resin and the acrylic resin such as a polymethyl methacrylate-based acrylic resin are preferable, and the polycarbonate resin is more preferable. Further, among polycarbonate resins, a bisphenol A-based polycarbonate resin is particularly preferable. Note that the glass plate may be composed containing two or more kinds of the above resins.

As the above glass, a colorless and transparent material with no coloring component added thereto may be used, or a colored and transparent material colored within the range not impairing the effect of the present invention may be used. Moreover, one kind of glass may be used or two or more kinds of glass may be used in combination, and for example, a laminated substrate may be made by laminating two or more layers. Though depending on the application place of the laminated glass, the inorganic glass is preferable.

Though the pair of glass plates 1A, 1B used for the laminated glass 10 may be made of different kinds of materials from each other but are preferably made of the same kind of material. The shape of the glass plate 1A, 1B may be flat or may have entirely or partially a curvature. The thickness of the glass plate 1A, 1B can be appropriately selected according to the usage of the laminated glass 10, and is generally preferably 1 to 10 mm. Further, the glass plate 1A, 1B may have a coating that imparts a water repellent function, a hydrophilic function, an antifogging function and the like to exposed surface exposed to the atmosphere. Further, the opposing surfaces opposing each other of the glass plates 1A, 1B may have functional coatings commonly including metal layers such as a low-radioactive coating, an infrared cut coating, a conductive coating and the like.

Note that in the case where the opposing surfaces of the glass plates 1A, 1B have the above-described functional coatings, the following intermediate bonding layers 2A, 2B are configured to be in contact with the functional coatings on the opposing surfaces of the glass plates 1A, 1B.

### [Intermediate bonding layer]

The pair of intermediate bonding layers 2A, 2B in the laminated glass 10 are flat membrane-like layers having main surfaces substantially the same shape and same dimensions as those of the main surfaces of the glass plates 1A, 1B and having a thickness as described below. The intermediate bonding layers 2A, 2B are provided to be in contact with the opposing surfaces of the glass plates 1A, 1B respectively while holding the SPD film 3 and the barrier layer 4 sandwiched therebetween. As described above, the intermediate bonding layers 2A, 2B have a function of bonding the SPD film 3 and the barrier layer 4 in a manner to hold them sandwiched between the pair of glass plates 1A, 1B via the intermediate bonding layers 2A, 2B to integrate them as the laminated glass 10.

As the constituent material of the intermediate bonding layers 2A, 2B, the same material constituting a conventionally-known intermediate film generally used for laminated glass can be used without any particular limitation. Concrete examples of the intermediate bonding layers 2A, 2B include the ones made by forming compositions containing the following thermoplastic resins as a main component into sheets having main surfaces with substantially the same shape and same dimensions as those of the main surfaces of the glass plates 1A, 1B.

The thermoplastic resin is not particularly limited as long as it can be integrated when a composition containing it as a main component is formed into sheets and used as the pair of intermediate bonding layers 2A, 2B to hold the SPD film 3 and the barrier layer 4 sandwiched therebetween, then inserted in between the pair of glass plates 1A, 1B, and heated and pressurized to form the laminated glass 10. Further, a thermoplastic resin having a visible light transmittance allowing the electrical switching of the transmittance of light by the SPD film to be sufficiently visible when it is formed into laminated glass is preferable, and a thermoplastic resin capable of achieving a visible light transmittance of 30% or more as laminated glass in a visible light transmitting state in which voltage is applied to the SPD film is particularly preferable.

Concrete examples of the thermoplastic resin include thermoplastic resins which are conventionally used as intermediate films, such as a polyvinyl acetal resin, a polyvinyl butyral resin (PVB), a polyvinyl chloride resin, a saturated polyester resin, a polyurethane resin, an ethylene-vinyl acetate copolymer resin (EVA), an ethylene-ethyl acrylate copolymer resin and the like. These thermoplastic resins may be used independently or two or more kinds of them may be used in combination.

The thermoplastic resin for the intermediate bonding layer of the laminated glass is selected according to usage and in consideration of balance among various properties such as transparency, weather resistance, strength, adhesive strength, permeable resistance, impact energy absorbency, moisture resistance, heat insulating property, sound insulating property and the like. From the above viewpoint, PVB, EVA and the like are preferable among the above-described thermoplastic resins.

Since the laminated glass of the present invention includes the SPD film, a material that does not affect the function of the SPD film when manufactured and used is preferable for the intermediate bonding layer. Here, many thermoplastic resins for the intermediate film contain a plasticizer and, for example, PVB generally contains a plasticizer. Therefore, when PVB is used for the intermediate bonding layer, it is preferable to select PVB containing a plasticizer that does not affect the SPD film to be used. In this regard, EVA contains no plasticizer and is therefore particularly preferable as the constituent material of the intermediate bonding layer.

Further, the heating temperature when forming the laminated glass is set according to the thermoplastic resin for the intermediate film, but if the heating temperature is higher than the heatproof temperature of the SPD film, the SPD film does not sufficiently function in some cases when it is made into the laminated glass. From this point, it is preferable to select the thermoplastic resin for the intermediate film so that the laminated glass forming temperature becomes equal to or lower than the heat proof temperature of the SPD film. The pair of intermediate bonding layers 2A, 2B used for the laminated glass 10 may be constituted using different kinds of thermoplastic resins from each other, but are preferably constituted using the same thermoplastic resin from the aforementioned viewpoint

As described above, for fabrication of the intermediate bonding layers 2A, 2B, a thermoplastic resin-containing composition containing the above-described thermoplastic resin as a main component is used. The thermoplastic resin-containing composition may contain one kind or two or more kinds of various additives such as, for example, an infrared absorbent, an ultraviolet absorbent, a fluorescer, an adhesion regulator, a coupling agent, a surface-active agent, an antioxidant, a heat stabilizer, a light stabilizer, a dehydrating agent, a defoaming agent, an antistatic agent, a flame retarder and the like within the range not impairing the effect of the present invention and according to various purposes. These additives are entirely uniformly contained in the intermediate bonding layers 2A, 2B.

Note that regarding containing of the additives for imparting functions other than adhesiveness to the intermediate bonding layer, such as the infrared absorbent, the ultraviolet absorbent, the fluorescer and the like, in particular, among the above additives, only one or both of the pair of intermediate bonding layers 2A, 2B may contain the additives. Further, when both of the pair of intermediate bonding layers 2A, 2B contain the additives, the intermediate bonding layers 2A, 2B may contain the same kind of additive in the same amount or in different amounts, and may contain different additives respectively.

The film thickness of the intermediate bonding layers 2A, 2B is not particularly limited. Concretely, the film thickness of one layer is preferably 0.05 to 0.8 mm and the total film thickness of two layers is preferably 0.1 to 1.6 mm, as with the intermediate film generally used for the laminated glass and the like. If the film thickness of one layer of the intermediate bonding layers is less than 0.05 mm or the total film thickness of two layers is less than 0.1 mm, the strength sometimes becomes insufficient, and if there is a large glass mismatch, peeling becomes more likely to occur. Conversely, when the film thickness of one layer of the intermediate bonding layers is greater than 0.8 mm or the total film thickness of two layers is greater than 1.6 mm, a phenomenon that displacement of the pair of glass plates 1A, 1B between which the intermediate bonding layers 2A, 2B are sandwiched occurs in a later-described compression bonding process in fabricating the laminated glass 10 and in an endurance test (actual exposure test, high-temperature test and the like), a so-called plate displacement phenomenon may occur.

Each of the intermediate bonding layers 2A, 2B is not limited to a single-layer structure. For example, a multilayer resin film, disclosed in JP-A 2000-272936, which is used for the purpose of improving sound insulating performance and in which resin films different in properties (different in loss tangent) are laminated, may be used as the intermediate bonding layer 2A, 2B. Also in this case, the intermediate bonding layers 2A, 2B do not need to be the same, but a single-layer structure or a multilayer structure can be selected independently for each of them.

### [SPD film]

The SPD film 3 has a main surface having an area smaller than and substantially the similar shape as those of the main surfaces of the glass plates 1A, 1B and is arranged between the intermediate bonding layers 2A, 2B so that the outer periphery of the main surface is located on the inner side of the outer peripheries of the main surfaces of the glass plates 1A, 1B. In the laminated glass 10, a member made by combining the SPD film 3 and the barrier layer 4 that is arranged such that its inner peripheral surface is in contact with an outer peripheral surface of the SPD film 3 and has a main surface shape in a frame shape, is configured to have a main surface having substantially the same shape and same dimensions as those of the main surfaces of the glass plates 1A, 1B.

In the laminated glass 10 illustrated in Fig. 1, Fig. 2, the main surfaces of the glass plates 1A, 1B are rectangular. The main surface shape of the SPD film 3 is a shape made by cutting all of peripheral edge portions at four sides into band shapes with respect to the main surface shapes of the glass plates 1A, 1B, such that a shape of cutout portion is a frame shape, and the barrier layer 4 is provided in a manner to compensate for the cutout portion. As necessary, the main surface shape of the SPD film 3 may be a shape made by cutting a part of the peripheral edge portions, for example, only a peripheral edge portion at any one side of the four sides into a band shape with respect to the main surface shapes of the glass plates 1A, 1B, a shape made by cutting peripheral edge portions at any two sides, or a shape made by cutting peripheral edge portions at any three sides. Also in this case, the barrier layer 4 only needs to be arranged according to the cutout shape of the SPD film 3 in a manner to compensate for the cutout portion.

The width of the cutout portion of the SPD film 3, namely, a width w of the barrier layer 4 can be appropriately selected according to the usage. In the laminated glass of the present invention, the barrier layer is configured to be able to efficiently suppress intrusion of moisture from an end face of the laminated glass as described below, and therefore the width of the cutout portion of the SPD film 3, namely, the width w of the barrier layer 4 can be set to 10 mm or less as the maximum width.

As the SPD film 3, an ordinary SPD film is usable which is configured to hold a polymer layer containing suspended particles which can be oriented by application of voltage thereto between two electrically insulating films having insides coated with transparent conducting films. Such an SPD film becomes a state with high visible light transmittance and high transparency by turning on the power supply switch to apply voltage between the transparent conducting films to thereby orient the suspended particles in the polymer layer. In a state that the power supply switch is off, the suspended particles in the polymer layer are not oriented, so that the SPD film becomes a state with low visible light transmittance and low transparency.

Note that the main surface of the SPD film 3 is composed of a main surface of the electrically insulating film such as the resin as described above on which the transparent conducting film and the polymer layer containing the suspended particles are not exposed, but is configured such that they are exposed at the end face of the SPD film 3. Accordingly, protecting the end face with the barrier layer 4 makes it possible to effectively suppress occurrence of failure in switching the visible light transmittance in response to on/off of the power supply switch at the peripheral edge portion of the SPD film 3.

As the SPD film 3, for example, a commercial product such as LCF-1103DHA (brand name, manufactured by Hitachi Chemical Co., Ltd.) or the like can be used. Note that such a commercial product is supplied in a predetermined size and therefore is cut, when used, into a desired size according to the size of the laminated glass. Note that the thickness of the SPD film 3 used for the laminated glass 10 is not particularly limited, but is preferably 0.2 to 0.4 mm from the viewpoint of handling property and easy availability.

### [Barrier layer]

In the laminated glass 10, the barrier layer 4 is arranged between the intermediate bonding layers 2A, 2B in a form surrounding the SPD film 3 such that the inner peripheral surface of the barrier layer 4 is in contact with the outer peripheral surface of the SPD film 3 for the purpose of protecting the end face of the SPD film 3.

As described above, the barrier layer 4 is arranged according to the shape of the cutout portion which the main surface of the SPD film 3 has with respect to the main surface shapes of the glass plates 1A, 1B in a manner to compensate for the cutout portion. The width w of the barrier layer 4 is appropriately selected according to the usage. In the laminated glass 10, even if the width w of the barrier layer 4 is 10 mm or less, the property of sufficiently suppressing intrusion of moisture from the end face of the laminated glass 10 and protecting the end face of the SPD film 3 from moisture (hereinafter, referred to as "moisture-proof property") can be maintained. Thus, use of the laminated glass in this embodiment makes it possible to apply the laminated glass with an SPD film to a usage in which higher design property is required.

The lower limit of the width of the barrier layer capable of keeping the moisture-proof property in the laminated glass in the embodiment of the present invention can be set to almost 3 mm though depending on the thickness and the laminated structure of the barrier layer. Note that in the case where higher moisture-proof property is required, the lower limit of the width of the barrier layer is preferably 5 mm.

In the barrier layer 4 having a main surface shape in a frame shape having an outer periphery substantially coincident with the outer peripheries of the main surfaces of the glass plates 1A, 1B, which is included in the laminated glass 10 having a rectangular main surface shape, the width w may be the same or different for each side of the frame portion along the four sides of the rectangle, or may be partially large or small regardless of the sides, as long as the width w is equal to or larger than the lower limit.

Further, from the viewpoint of sufficiently protecting the end face of the SPD film 3, the thickness of the barrier layer 4 is preferably substantially the same as the thickness of the SPD film 3. Specifically, the thickness of the barrier layer 4 is preferably within ±0.1 mm of the thickness of the SPD film 3, and more preferably within ±0.075 mm.

The barrier layer 4 has a laminated structure in a configuration that the bonding layer 41 is sandwiched between the two low-moisture permeable layers 42a, 42b. Note that all of the shapes of the main surfaces of the layers constituting the barrier layer 4 are the same as the shape of the main surface of the barrier layer 4. The barrier layer 4 has the laminated structure composed of the low-moisture permeable layers 42a, 42b and the bonding layer 41, and thereby can impart the moisture-proof property to the SPD film in the laminated glass 10 to be obtained. Further, it is possible to eliminate the poor appearance due to bubbles remaining near the interface between the barrier layer 4 and the SPD film 3, which are generated when the whole barrier layer 4 is composed of the low-moisture permeable layer.

The constituent material of the two low-moisture permeable layers 42a, 42b is not particularly limited as long as it is a low-moisture permeable material that can be bonded and fixed by the bonding layer 41 and the pair of intermediate bonding layers 2A, 2B when they are made into the lammated glass. Here, the low-moisture permeability means the property that the permeability of water vapor is low, and the low-moisture permeable layers of the barrier layer of the laminated glass in the embodiment of the present invention have lower moisture permeability than that of the bonding layer.

Specifically, the low-moisture permeable layers 42a, 42b are preferably made of a low-moisture permeable material having a moisture permeability at a temperature of 40°C and a humidity of 90 %RH measured according to JIS Z0208 of 15 g/m² • day or less when the thickness is 0.1 mm, and more preferably made of a material having a moisture permeability under the same conditions as the above of 8 g/m² • day or less.

Concrete examples of the low-moisture permeable material include resins such as a polycarbonate resin, a polymethyl methacrylate resin (PMMA), a polyethylene terephthalate resin (PET), a polyethylene naphthalate resin (PEN), a polyimide resin, a polyethersulfone resin, a polyarylate resin, a nylon resin and the like. The low-moisture permeable layers 42a, 42b may be made of the same low-moisture permeable material or may be made of different low-moisture permeable materials.

Among them, the low-moisture permeable layers 42a, 42b are preferably composed of a film (PET film) containing PET as a main component.

Here, though depending on the kind of PET and additives, the moisture permeability at a temperature of 40°C and a humidity of 90 %RH measured according to JIS Z0208 in a PET film with a thickness of 0.1 mm is about 5 to 8 g/m² • day.

As for the thickness of the low-moisture permeable layers 42a, 42b, though depending on the thickness of the whole barrier layer 4 and the width w of the barrier layer, each of the low-moisture permeable layers 42a, 42b is preferably 0.05 to 0.25 mm and more preferably 0.10 to 0.19 mm. Further, the total thickness of the low-moisture permeable layers 42a, 42b is preferably 0.10 to 0.40 mm, and more preferably 0.15 to 0.38 mm Setting the individual thickness and the total thickness of the low-moisture permeable layers 42a, 42b to the above ranges makes it possible to impart sufficient moisture-proof property to the barrier layer 4.

The bonding layer 41 sandwiched between the low-moisture permeable layers 42a, 42b can be made of the same material as those of the intermediate bonding layers 2A, 2B. The bonding layer 41 is preferably composed of a resin film selected from an EVA film and a PVB film.

The bonding layer 41 has a function of bonding the low-moisture permeable layers 42a, 42b to integrate them as the barrier layer 4, and bonding the barrier layer 4 and the SPD film 3. Further, provision of the bonding layer 41 makes it possible to suppress bubbles remaining near the interface between the barrier layer 4 and the SPD film 3. To this end, the thickness of the bonding layer 41 is preferably 0.05 mm or more and more preferably 0.1 mm or more though depending on the thickness of the whole barrier layer 4 and the width w of the barrier layer. However, the material constituting the bonding layer 41 is higher in moisture permeability than the low-moisture permeable layers, and therefore the thickness of the bonding layer 41 is preferably 0.2 mm or less from the viewpoint of the moisture-proof property though depending on the thickness of the whole barrier layer 4 and the width w of the barrier layer.

Here, though depending on the kind of EVA, PVB and additives, moisture permeabilities at a temperature of 40°C and a humidity of 90 %RH measured according to JIS Z0208 of an EVA film and a PVB film with a thickness of 0.4 mm are about 25 to 50 g/m² • day and about 70 to 150 g/m² • day respectively.

Further, in the barrier layer 4, the ratio of the total thickness of the low-moisture permeable layers 42a, 42b to the thickness of the barrier layer 4 is preferably 0.5 to 0.9, and the ratio is more preferably 0.7 to 0.9. Note that when the ratio of the total thickness of the low-moisture permeable layers 42a, 42b to the thickness of the barrier layer 4 is within the above-described range, the barrier layer 4 can maintain sufficient adhesiveness while having sufficient moisture-proof property. Further, it is possible to sufficiently suppress poor appearance due to bubbles remaining near the interface between the barrier layer 4 and the SPD film 3.

In the laminated glass 10 illustrated in Figs. 1 and 2, the barrier layer 4 has a three-layer laminated structure in which the two low-moisture permeable layers 42a, 42b holds the one bonding layer 41 sandwiched therebetween, but the laminated structure of the barrier layer in the laminated glass in the embodiment of the present invention is not limited to this. The barrier layer only needs to have at least one low-moisture permeable layer and at least one bonding layer. For example, the barrier layer may have n bonding layers (n is an integer) and n low-moisture permeable layers (n is an integer) and have a configuration in which they are alternately laminated, and may have a configuration in which n+1 bonding layers and n low-moisture permeable layers are alternately laminated starting from a bonding layer. Further, the barrier layer may have a configuration in which n+1 low-moisture permeable layers and n bonding layers are alternately laminated starting from a low-moisture permeable layer as in the barrier layer 4 in the laminated glass 10. Further, the barrier layer may have layers other than the low-moisture permeable layer and the bonding layer within the range not impairing the effect of the present invention.

Among them, a preferable laminated structure of the barrier layer is a laminated structure in which n+1 low-moisture permeable layers and n bonding layers are alternately laminated starting from a low-moisture permeable layer and a moisture permeable layer is laminated last, and the number of n is more preferably 1 to 3, and a three-layer laminated structure is particularly preferable in which a number of n is 1 and then the two low-moisture permeable layers hold the one bonding layer sandwiched therebetween like the barrier layer 4.

Note that in any case of the barrier layer in any laminated structure, the ratio of the total thickness of the low-moisture permeable layers to the total thickness of the barrier layer is preferably 0.5 to 0.9, and the ratio is more preferably 0.7 to 0.9 as in the case of the above-described barrier layer 4.

Further, the barrier layer is preferably composed of only the low-moisture permeable layers and the bonding layers, and more preferably composed of only the low-moisture permeable layers composed of the PET film and the bonding layers composed of the EVA film or the PVB film.

The laminated glass of the present invention has been described above taking the laminated glass 10 illustrated in Figs. 1, 2 as an example, but the present invention is not limited to this. The design can be changed or modified in a range without departing from the scope and the range of the present invention. The laminated glass in the embodiment may have a configuration having three or more glass plates as necessary in which, for example, one or more glass plates are laminated on the atmosphere side of the glass plate 1A or the glass plate 1B of the laminated glass 10 each via an intermediate bonding layer prepared separately from the intermediate bonding layer 2A, 2B. Further, the laminated glass in the embodiment may optionally have another layer within the range not impairing the effect of the present invention.

### (Another layer)

The laminated glass in the embodiment may have, as another layer, another functional film other than the SPD film, between the pair of glass plates. When the laminated glass has the another functional film, for example, the laminated glass has an intermediate bonding layer in addition to the above-described pair of intermediate bonding layers and is made by sequentially laminating the glass plate, the intermediate bonding layer, the another functional film, the intermediate bonding layer, the layer made by combining the SPD film and the barrier layer, the intermediate bonding layer, and the glass plate.

Examples of another functional film include an infrared cut film and the like. As the infrared cut film, concretely, the one in which a conventionally-known infrared reflective film on a supporting film such as a infrared reflective film having a thickness of about 100 to 500 nm and consisting of a dielectric multilayer film, a liquid crystal alignment film, an infrared reflector-containing coating film, or a single-layer or multilayer infrared reflective film including a metal layer is formed as an infrared reflective film on a supporting film such as a PET film having a thickness of about 25 to 200 µm or the like, can be exemplified. As the infrared cut film, a dielectric multilayer film made by laminating resin films different in refractive index and having a total film thickness of about 25 to 200 µm and the like can be exemplified.

The laminated glass in the embodiment may have, as another layer, for example, a black ceramic layer in a band shape at a part or all of the peripheral edge portions for the purpose of hiding a portion attached to the frame body or the like of the laminated glass, the wiring conductor and so on. The width of the black ceramic layer is appropriately selected according to the usage of the laminated glass. For example, when the laminated glass is used for a ceiling part of an automobile, the black ceramic layer is usually formed in a frame shape with a width of about 10 to 100 mm.

The black ceramic layer can be formed in the above-described shape by an ordinary method on the main surface on the atmosphere side or the intermediate bonding layer side of any one of the pair of glass plates included in the laminated glass. The formation place of the black ceramic layer is appropriately selected according to the usage.

Note that "black" of the black ceramic layer does not mean black defined by three attributes of color or the like, but includes a range where it is recognizable as black adjusted to inhibit visible light from being transmitted to an extent capable of hiding at least a portion required to be hidden. Accordingly, in the black ceramic layer, there may be gradation in black as necessary within a range in which the layer can fulfill the function, and the color shade may be slightly different from black defined by three attributes of color. From the same viewpoint, the black ceramic layer may be configured to be an integrated film in which the whole layer continues or may be composed of dot patterns or the like in which the percentage of visible light transmission can be adjusted by the setting of the shape, arrangement or the like, according to the place where the black ceramic layer is arranged.

### [Manufacture of laminated glass]

The laminated glass in the embodiment of the present invention can be manufactured by a generally used publicly-known technique. In the laminated glass 10, a laminate in which the SPD film 3 and the barrier layer 4 are arranged to be located in a predetermined positional relationship between the pair of intermediate bonding layers 2A, 2B is fabricated, and the laminate is inserted in between the pair of glass plates 1A, 1B to prepare a laminated glass precursor being laminated glass before compression bonding in which the glass plate 1A, the intermediate bonding layer 2A, the layer composed of the SPD film 3 and the barrier layer 4, the intermediate bonding layer 2B, and the glass plate 1B are laminated in this order. Also in the case of having another layer, glass plates and layers are laminated in the similar lamination order to that of similarly obtained laminated glass to prepare a laminated glass precursor.

The laminated glass precursor is put in a vacuum bag such as a rubber bag, the vacuum bag is connected to an exhaust system, bonding is performed at a temperature of about 70 to 110°C while pressure-reduction suction (deaeration) is performed so that a pressure in the vacuum bag becomes a pressure reduction degree of about -65 to -100 kPa (absolute pressure), whereby the laminated glass in the embodiment can be obtained Further, for example, the laminated glass is subjected to compression bonding of heating and pressurizing it under conditions of 100 to 110°C and a pressure of 0.6 to 1.3 MPa, whereby laminated glass superior in durability can be obtained.

The laminated glass of the present invention is laminated glass excellent in property of switching transmittance of light for a long term by suppressing deterioration over time of the SPD film, in particular, deterioration due to intrusion of moisture at the end portion, and is suitably used for the window glass for vehicle, window glass for building and the like.

### EXAMPLES

Hereinafter, the present invention will be described in more detail using examples. The present invention is not limited to the embodiments and examples described below.

### [Experimental example 1]

An evaluation sample having PVB whose moisture content was measurable was fabricated in place of the SPD film as described below, and the moisture-proof property of the barrier layer applied to the laminated glass of the present invention was evaluated.

### (Fabrication of evaluation sample)

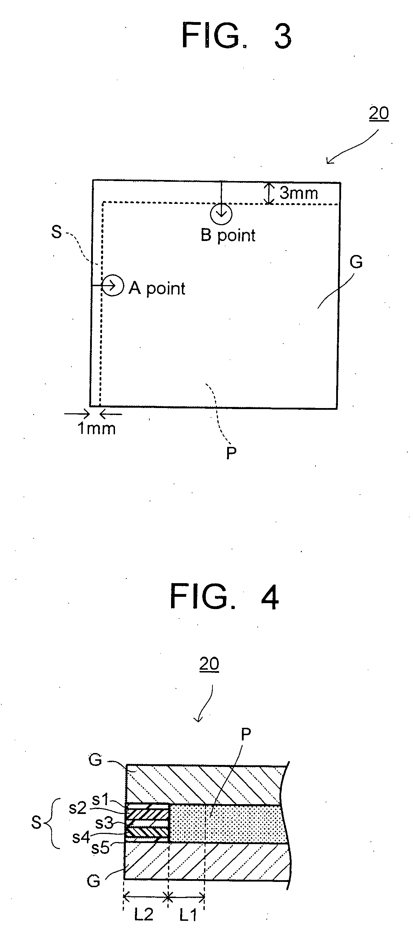

An evaluation sample 20, whose front view is illustrated in Fig. 3 and whose cross-sectional view at the end portion is illustrated in Fig. 4, was fabricated as follows.

Between two glass plates G (2 mm thick, 100 mm squares) made of soda lime glass, a 99 × 97 mm and 0.8 mm thick of PVB film (manufactured by Eastman Chemical Company, RK11 (brand name)) P was arranged so that its two sides were aligned with two sides of the glass plates G. Further, a barrier layer S in a shape to compensate for the cutout portion of the PVB film P between the two glass plates G and having band-shaped regions formed in an L-shape was arranged. Note that the barrier layer S is arranged such that the end face on the inside of the L-shape is in contact with end faces of two sides of the PVB film P not aligned with the two sides of the glass plates G and the outside of the L-shape is aligned with the outer periphery of the glass plates G. Note that one of the band-shaped regions of the barrier layer S has a width of 3 mm and the other of the band-shaped regions has a width of 1 mm.

Note that the laminated structure of the barrier layer S is a five-layer laminated structure, as illustrated in Fig. 4, in which an EVA film (0.1 mm thick, manufactured by TOSO NIKKEMI CORPORATION, Mersen G7055 (brand name)) s3 is sandwiched between two PET films (0.25 mm thick, Toyobo Co., Ltd, COSMOSHINE (brand name)) s2, s4 and, in a manner to hold this laminate sandwiched therebetween, two EVA films (0.1 mm thick, manufactured by TOSO NIKKEMI CORPORATION, Mersen G7055 (brand name)) s1, s5 are arranged on both sides of the two PET films s2, s4. Note that the moisture permeabilities in the cases of the thickness of 0.1 mm of the PET film used in the above and the thickness of 0.4 mm of the EVA film used in the above, measured under conditions of a temperature of 40°C and a humidity of 90 %RH according to JIS Z0208, were 6.0 g/m² • day and 37 g/m² • day respectively.

The laminate obtained in the above was put in a vacuum bag and deaerated. After deaeration the vacuum bag was put into an oven maintained at 120°C and let stand for 30 minutes, and subjected to compression bonding, whereby an evaluation sample 20 was obtained. Note that two same evaluation samples 20 were obtained in the above.

### (Moisture-proof property evaluation)

One of the evaluation samples 20 obtained in the above was put in a thermohygrostat at 80°C and a humidity of 95 %RH for 76 hours, and the other one was put in a thermohygrostat at 50°C and a humidity of 95 %RH for 376 hours. After the sample was taken out of the thermohygrostat and returned to normal temperature, spectroscopic measurement was performed around an A point that was inside by 3.5 mm from a side where the width of the barrier layer was 1 mm and around a B point that was inside by 5.5 mm from a side where the width of the barrier layer was 3 mm, from the two sides of the glass plate G on the side where the barrier layer S was arranged, to thereby measure the moisture content of the PVB film P at the A point and the B point. Note that in Fig. 3, the A point and the B point are apexes of heads of arrows, and circles surrounding the apexes schematically indicate measurement regions. Note that in Fig. 4, L2 indicates a width (1 mm or 3 mm) of the barrier layer. Further, in Fig. 4, L1 is 2 mm, which means that the moisture content was measured at a position 2 mm from the inside of the barrier layer. The measurement results are listed in Table 1.

### [Comparative experimental example 1]

An evaluation sample for comparative experiment was similarly fabricated except that an EVA film of a thickness of 0.8 mm was used in place of the barrier layer S in the evaluation sample 20 in the above Experimental example 1, and subjected to moisture-proof property evaluation similar to the above. The measurement result is listed in Table 1.

**[Table 1]**

| | 80°C 95 %RH after 76 hours | | 50°C 95 %RH after 376 hours | |
|---|---|---|---|---|
| | A point | B point | A point | B point |
| Experimental example 1 | 0.83 % | 0.50 % | 0.54 % | 0.38 % |
| Comparative experimental example 1 | 0.99 % | 0.59 % | 0.73 % | 0.44 % |

From Table 1, it is found that use of the barrier layer in a structure in which the low-moisture permeable layer and the bonding layer achieves excellent moisture-proof property as compared with the case of using only the bonding layer.

### [Example 1]

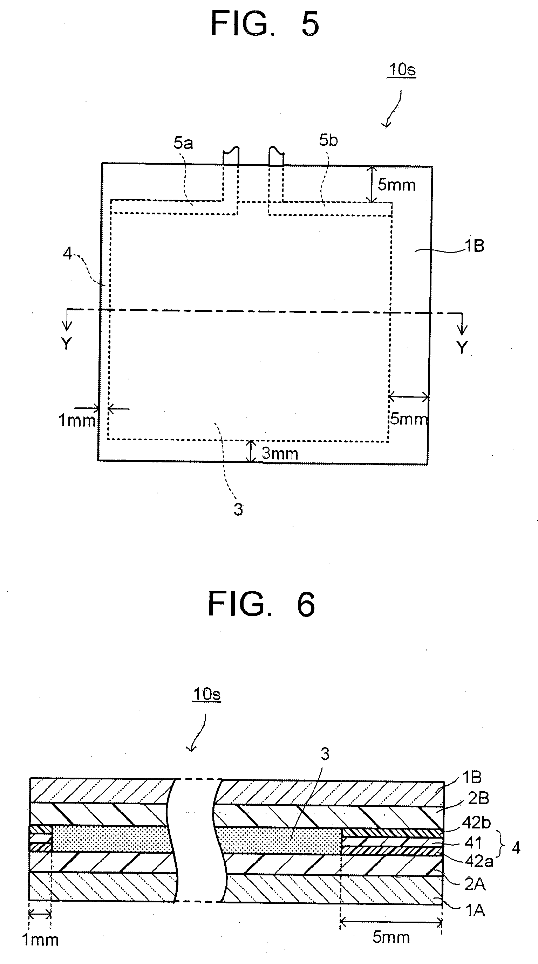

Laminated glass 10s having the same configuration as that of the laminated glass 10 described as one embodiment in the above and illustrated in Figs. 1, 2, whose front view is illustrated in Fig. 5 and whose cross-sectional view taken along a line Y-Y is illustrated in Fig. 6, was fabricated as follows.

### (Fabrication of laminated glass)

On one glass plate 1A (100 mm × 100 mm, 2 mm thick) made of soda lime glass, the intermediate bonding layer 2A composed of an EVA film (manufactured by TOSO NIKKEMI CORPORATION, Mersen G7055 (brand name)) of 100 × 100 mm, 0.4 mm thick was arranged so that its four sides were aligned with four sides of the glass plate 1A.

Further, on the intermediate bonding layer 2A, the barrier layer 4 (having inner dimensions of 94 × 92 mm, and widths of 1 mm, 3 mm, 5 mm, 5 mm at four sides respectively) in a frame shape with the same outer dimension as those of the glass plate 1A was arranged so that its four sides were aligned with the four sides of the glass plate 1A. The barrier layer 4 was configured such that the bonding layer 41 composed of an EVA film (0.05 mm thick, manufactured by TOSO NIKKEMI CORPORATION, Mersen G7055 (brand name)) was sandwiched between the low-moisture permeable layer 42a composed of a PET film (0.19 mm thick, Toyobo Co., Ltd, COSMOSHINE (brand name)) and the low-moisture permeable layer 42b composed of a PET film (0.1 mm thick, Toyobo Co., Ltd, COSMOSHINE (brand name)). Note that each of the bonding layer 41 and the low-moisture permeable layers 42a, 42b was made to have the same size as that of the main surface of the barrier layer 4. Note that the moisture permeabilities in the cases of the thickness of 0.1 mm of the PET film used in the above and the thickness of 0.4 mm of the EVA film used in the above, measured under conditions of a temperature of 40°C and a humidity of 90 %RH according to JIS Z0208, were 6.0 g/m² • day and 37 g/m² • day respectively.

The SPD film 3 (0.35 mm thick, manufactured by Hitachi Chemical Co., Ltd, LCF-1103DHA 90 (brand name)) cut into a size of 94 × 92 mm and having two bus bars 5a, 5b for operation and a cable (not illustrated) attached to one side of sides of 94 mm was arranged on the inside of the barrier layer 4 so that its end face was in contact with the end face of the barrier layer 4. In this event, they were arranged such that the side having the bus bars 5a, 5b of the SPD film 3 was in contact with the barrier layer 4 of 5 mm wide side.

Further, in a manner to cover the whole main surfaces of the barrier layer 4 and the SPD film 3, one EVA film that was the same as that used for the intermediate bonding layer 2A was overlaid as the intermediate bonding layer 2B on them, and further one glass plate that was the same as that used for the glass plate 1A was overlaid as the glass plate 1B on the intermediate bonding layer 2B, in order without displacement, and their four sides were fixed with a slip prevention tape, whereby a laminate was fabricated.

This laminate was put in a vacuum bag and subjected to compression bonding at 110°C while deaeration was being performed under reduced pressure at an absolute pressure of -60 kPa or less, and then subjected to further compression bonding under conditions of a temperature of 110°C and a pressure of 1.3 MPa, whereby the laminated glass 10s having the barrier layer 4 in a frame shape having sides of 1 mm, 3mm, and 5 mm wide and the SPD film 3 inside the barrier layer 4 was obtained. Note that two pieces of the laminated glass 10s were fabricated in Example 1.

### (Comparative example 1)

Two pieces of the laminated glass in Comparative example 1 were fabricated similarly to Example 1 except that the barrier layer 4 of the laminated glass 10s in Example 1 was composed of an EVA film having a thickness of 0.4 mm.

Each one of two pieces of laminated glass obtained in each of the Example 1 and Comparative example 1 was let stand in a thermohygrostat at 80°C and a humidity of 95 %RH for 76 hours, and each remaining one of the two pieces was let stand in a thermohygrostat at 50°C and a humidity of 95 %RH for 376 hours.

Each of the pieces of laminated glass after let stand under the above conditions was taken out of the thermohygrostat and returned to normal temperature and then illuminated from the bottom in a state in which the glass was made flat, and the width where deterioration was confirmed from the outer periphery of the SPD film 3 in any one of states where the SPD film 3 was in a colored state and in a transparent state, was visually observed and recorded for each of the widths of the sides of the barrier layer 4 of 1 mm, 3 mm, and 5 mm. The results are listed in Table 2.

**[Table 2]**

| Test conditions | | 80°C 95 %RH after 76 hours | | | 50°C 95 %RH after 376 hours | | |
|---|---|---|---|---|---|---|---|
| Width of barrier layer 4 [mm] | | 1 | 3 | 5 | 1 | 3 | 5 |
| Deterioration width [mm] | Example 1 | 8 | 6 | 5 | 1 | 0 | 0 |
| | Comparative example 1 | 10 | 8 | 8 | 3 | 1 | 0 |

From Table 2, it is found that use of the barrier layer in a structure in which the low-moisture permeable layer and the bonding layer are laminated suppresses deterioration of the SPD film as compared with the case of using only the bonding layer.

## Claims

1. A laminated glass, comprising:
a pair of glass plates opposing each other;
a pair of intermediate bonding layers in contact with opposing surfaces of the pair of glass plates respectively;
a suspended particle device film arranged in a predetermined region in a region corresponding to a region except at least a part of band-shaped regions of peripheral edge portions of a main surface of the glass plate, between the pair of intermediate bonding layers; and
a barrier layer in a laminated structure including a low-moisture permeable layer and a bonding layer, arranged between the pair of intermediate bonding layers in a manner to correspond to the band-shaped regions.

2. The laminated glass according to claim 1,
wherein a planar shape of the barrier layer is a frame shape, and the suspended particle device film is arranged such that an end face thereof is in contact with an end face on an inside of the barrier layer in the predetermined region that is a whole region excepting an arrangement region of the barrier layer from the region corresponding to the main surface of the glass plate.

3. The laminated glass according to claim 1 or 2,
wherein a moisture permeability of the low-moisture permeable layer at a temperature of 40°C and a humidity of 90 %RH measured according to JIS Z0208 is 15 g/m² • day or less when a thickness of the low-moisture permeable layer is 0.1 mm

4. The laminated glass according to any one of claims 1 to 3,
wherein the low-moisture permeable layer is composed of a polyethylene terephthalate resin film.

5. The laminated glass according to any one of claims 1 to 4,
wherein the bonding layer is selected from an ethylene-vinyl acetate copolymer resin film and a polyvinyl butyral resin film

6. The laminated glass according to any one of claims 1 to 5,
wherein a maximum width of the barrier layer is 10 mm or less.

7. The laminated glass according to any one of claims 1 to 6,
wherein the barrier layer has a laminated structure in which two low-moisture permeable layers hold the bonding layer sandwiched therebetween.

8. The laminated glass according to any one of claims 1 to 7,
wherein the barrier layer consists of the low-moisture permeable layer composed of a polyethylene terephthalate resin film, and the bonding layer selected from an ethylene-vinyl acetate copolymer resin film and a polyvinyl butyral resin film.

9. The laminated glass according to any one of claims 1 to 8,
wherein a ratio of a total thickness of the low-moisture permeable layer to a total thickness of the barrier layer in the barrier layer is 0.5 to 0.9.
